# EUROPÄISCHE PATENTSCHRIFT

(11) **EP 0 585 567 B1**
(45) Veröffentlichungstag und Bekanntmachung des Hinweises auf die Patenterteilung: **13.03.1996**
(21) Anmeldenummer: 93110920.1
(22) Anmeldetag: 08.07.1993
(51) Int. Cl.: F16H 61/28, F16H 63/08

(54) **Schaltvorrichtung eines Kraftfahrzeuggetriebes**
Shifting device for automotive gearbox
Dispositif de changement de rapport pour une boîte de vitesses

(30) Priorität: 29.08.1992 DE 4228797
(43) Veröffentlichungstag der Anmeldung: 09.03.1994
(73) Patentinhaber: Dr.Ing.h.c. F. Porsche Aktiengesellschaft, D-70435 Stuttgart (DE)
(72) Erfinder: Müller, Robert, D-71297 Mönsheim (DE)

(56) Entgegenhaltungen:
- DE-A- 2 235 368
- DE-C- 4 205 670
- GB-A- 2 054 773
- GB-A- 2 057 607
- PATENT ABSTRACTS OF JAPAN vol. 004, no. 009 (M-089)23. Januar 1980 & JP-A-54 145 854 (SUZUKI)

## Beschreibung

Die Erfindung betrifft eine Schaltvorrichtung nach dem Oberbegriff des Anspruchs 1.

In dem Buch "Zahnradgetriebe", Johannes Looman, Springer-Verlag Berlin 1988, Seite 10, sind Gruppengetriebe beschrieben, die ein meistens zweigängiges, dem normalen Gangschaltgetriebe vor- oder nachgeschaltetes Stufengetriebe darstellen. Sie dienen dazu, durch Mehrfachnutzung von Radsätzen die Gangzahl und den Übersetzungsbereich des Getriebes zu erhöhen, ohne die Getriebe-Baulänge zu vergrößern.

Wenn ein solches synchronisiertes Gangschaltgetriebe so gestaltet ist, daß die Getriebegänge durch gleichzeitiges Schließen zweier Synchronisierkupplungen schaltbar sind, wird der Kraftaufwand bei rein manueller Betätigung recht hoch.

Aus der DE-A-22 35 368 ist eine gattungsgemäße Schaltvorrichtung für ein synchronisiertes Gangschaltgetriebe bekannt, bei dem die Getriebegänge durch gleichzeitiges Schließen zweier Synchronisierkupplungen mit Schiebemuffen, in die Schaltgabeln eingreifen, schaltbar sind, und wobei die Schiebemuffe einer Synchronisierkupplung beim Schalten aller Getriebegänge mitwirkt. Bei dieser Schaltvorrichtung wird die beim Schalten aller Getriebegänge mitwirkende Synchronisierkupplung über eine Schiebemuffe betätigt, die über eine Hebelanordnung von einem doppelt wirkenden Zylinder betätigt wird. Die anderen Synchronisierkupplungen werden auf an sich bekannte Weise über eine Schaltwelle und einen Schalthebel manuell betätigt, wobei der Schalthebel in mindestens zwei Schaltgassen (H-Schema) bewegt wird. Eine derartige Schaltvorrichtung erfordert entweder eine aufwendige steuerungs- bzw. regelungstechnische Kopplung zwischen den manuell betätigten Synchronisierkupplungen und der mit dem Servoantrieb bzw. dem doppelt wirkenden Zylinder gekoppelten Synchronisierung oder fordert dem Fahrer einen aufwendigen Schaltvorgang ab.

Es ist die Aufgabe der Erfindung, eine Schaltvorrichtung für ein derartiges Getriebe zu schaffen, die mit geringem Kostenaufwand herstellbar ist, die manuellen Schaltkräfte deutlich reduziert und den vom Fahrer auszuführenden Schaltvorgang zu vereinfachen.

Zur Lösung dieser Aufgabe dienen die kennzeichnenden Merkmale des Anspruchs 1. Wenn die eine Synchronisierkupplung, die beim Schalten aller Getriebegänge beteiligt ist, mit einem Servoantrieb betätigt wird, ist die vom Fahrer des Kraftfahrzeugs zu leistende Schaltarbeit deutlich geringer. Er braucht nur eine Synchronisierkupplung manuell betätigen und die von ihm zu leistende Schaltarbeit ist geringer als bei herkömmlicher Getriebeschaltung. Von Hand müssen nur die rotierenden Getriebeteile (Drehmassenanteil ca. 15%) synchronisiert werden. Die Synchronisierung der Kupplungsscheibe (Drehmassenanteil ca. 85%) übernimmt die Servoeinrichtung.

Weitere, einen relativ einfachen Servoantrieb ausgestaltende, schaltungstechnische und konstruktive Merkmale enthalten die Unteransprüche. Grundsätzlich wäre es auch möglich, alle Synchronisierkupplungen mit Servoantrieb zu schalten. Die Herstellkosten für eine solche Schaltung wären aber um ein vielfaches höher, da für die wechselseitige Abstimmung dieser Servoantriebe eine teure Regelschaltung nötig wäre.

Ein Ausführungsbeispiel der Erfindung ist in der Zeichnung dargestellt und wird nachfolgend erläutert.

Es zeigen:

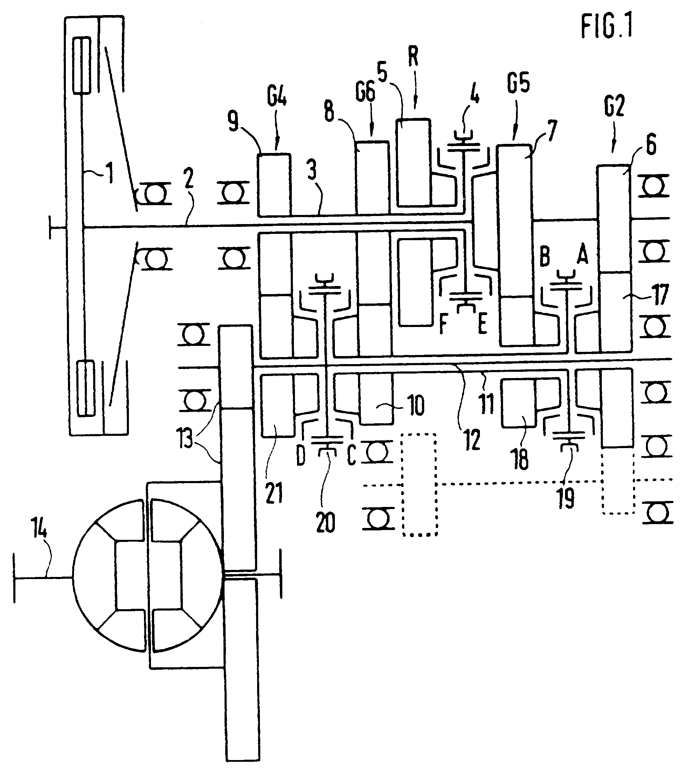

- Fig.1: Gangschaltgetriebe schematisch dargestellt.

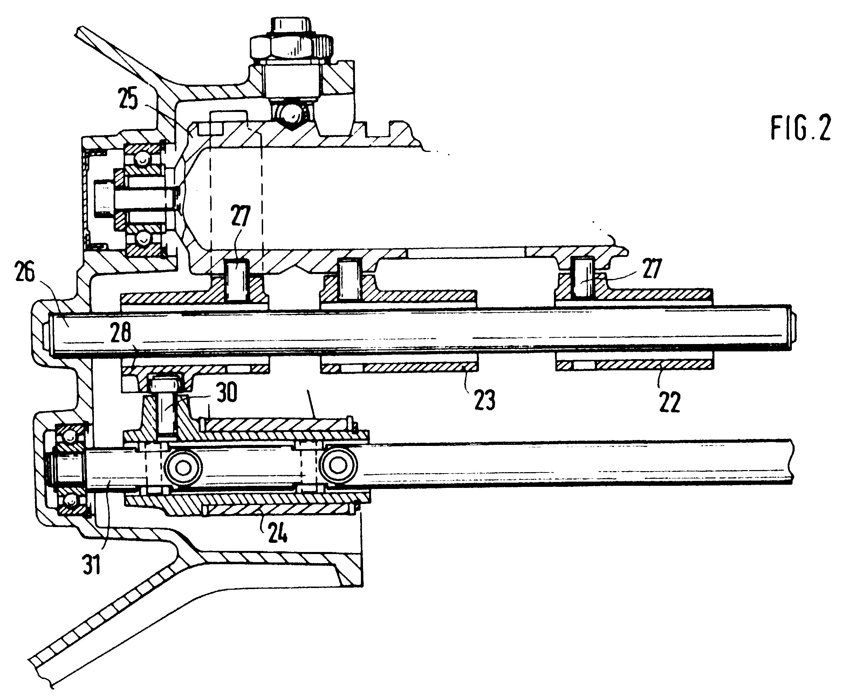

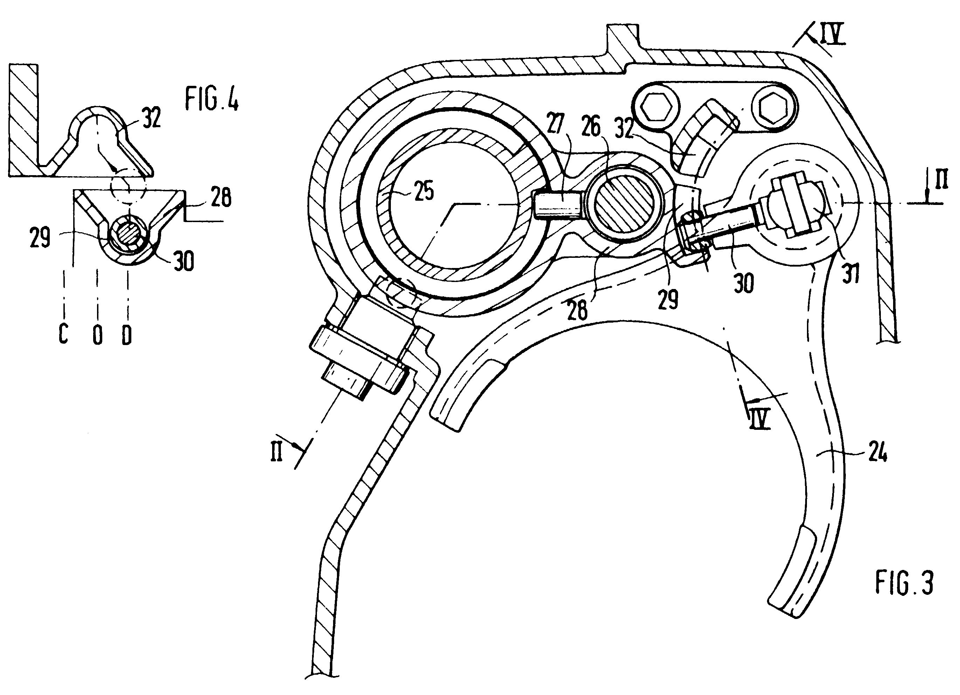

- Fig.2: Längsschnitt der Schaltwalze und der Schaltstangen nach Linie II-II der Fig. 3.
- Fig.3: Querschnitt der Schaltwalze und der Schaltstangen
- Fig.4: Abwicklung in Ebene IV-IV der Fig.3
- Fig.5: Pneumatisch-elektrischer Steuerungsplan

Über eine zwischen einem Hubkolbenmotor und dem Gangschaltgetriebe angeordnete Motorkupplung 1 wird eine zentrale Eingangswelle 2 des Gangschaltgetriebes angetrieben. Auf ihr ist eine Hohlwelle 3 drehbar gelagert und durch eine Kupplung E mit der Eingangswelle 2 drehmomentübertragend verbindbar. Eine die Kupplung E betätigende Schiebemuffe 4 ist gegenüber der Eingangswelle 2 drehfest und längsverschieblich.

Mittels einer Kupplung F ist das Losrad 5 des Rückwärtsganges R mit der Eingangswelle 2 koppelbar. Auf der Eingangswelle 2 sind das Festrad 6 des zweiten Ganges G2 und das Festrad 7 des fünften Ganges G5 angeordnet. Auf der Hohlwelle 3 sitzen das Festrad 8 des sechsten Ganges G6 und das Festrad 9 des vierten Ganges G4. Ein mit dem Festrad 8 kämmendes Festrad 10 ist an einer zweiten Hohlwelle 11 befestigt, in der zentral eine Ausgangswelle 12 gelagert ist. Mit der Ausgangswelle 12 wird über ein endseitiges Radpaar 13 eine Fahrzeugachse 14 angetrieben.

Mit dem Festrad 6 von G2 kämmt ein auf der Hohlwelle 11 gelagertes Losrad 17, mit dem Festrad 7 von G5 ein ebenfalls auf der Hohlwelle 11 gelagertes Losrad 18. Mit einer Synchronisierkupplung A-B, deren Schiebemuffe 19 zur Hohlwelle 11 drehfest ist, ist durch Kupplung A das Losrad 17, durch Kupplung B das Losrad 18 mit der Hohlwelle 11 kuppelbar.

Mit einer weiteren Synchronisierkupplung C-D deren Schiebemuffe 20 zur Ausgangswelle 12 drehfest ist, ist die Hohlwelle 11 über Kupplung C mit der Ausgangswelle 12 kuppelbar. Über Kupplung D ist ein auf der Ausgangswelle 12 gelagertes Losrad 21, das mit dem Festrad 9 von G4 kämmt, mit der Ausgangswelle 12 verbindbar.

Wie nachfolgende Tabelle zeigt, werden zum Schalten aller Vorwärtsgänge G1 bis G6 gleichzeitig zwei Kupplungen in Schließlage gebracht.

| Gang | Kupplungen | | A | B | C | D | E | F |
|---|---|---|---|---|---|---|---|---|
| 1. | A | D | X | | | X | | |
| 2. | A | C | X | | X | | | |
| 3. | B | D | | X | | X | | |
| 4. | E | D | | | | X | X | |
| 5. | B | C | | X | X | | | |
| 6. | E | C | | | X | | X | |
| R | F | D | | | | X | | X |

Die Synchronisierkupplung C-D ist beim Schalten aller Gänge beteiligt. Da sie in ihrer neutralen Nullage den Getriebeleerlauf ergibt, ist es möglich, aus allen geschalteten Gängen direkt in den Leerlauf und umgekehrt aus dem Leerlauf direkt in jeden beliebigen Gang zu schalten.

Die Gänge G2, G5, G6 und G4 bestehen jeweils aus einem Radpaar. Der Gang G1 wird durch das Radpaar 6,17 von G2 und den als Gruppengetriebe dahintergeschalteten Gängen G4 und G6 gebildet. Zusammen mit dem Radpaar 7,18 von G5 bilden die Gänge G4 und G6 den dritten Gang G3.

Um die Synchronisierkupplungen in Schließlage bringen zu können, greifen in ihre Schiebemuffen 19, 4, 20 Schaltgabeln 22, 23, 24 ein, die von einer Schaltwalze 25 betätigt werden. Die Schaltwalze 25 ist in herkömmlicher Weise ausgeführt und bewirkt mit Kurvenbahnen eine Axialverschiebung der Schaltgabeln. Die Schaltgabeln 22, 23 sind auf einer gehäusefesten Achse 26 längsverschieblich gelagert und von der Schaltwalze 25 direkt über Stifte 27 verschiebbar. Auf der Achse 26 ist auch ein Mitnehmer 28 gelagert und von der Schaltwalze 25 über einen Stift 27 betätigbar. In eine Nut 29 des Mitnehmers 28 greift ein Kuppelfinger 30 ein. Der Kuppelfinger 30 ist an einer Welle 31 befestigt, auf der die Schaltstange 24 gelagert ist.

Soll die Synchronisierkupplung C-D in ihre mittlere Neutralstellung gebracht werden, um das Getriebe in Leerlauf zu schalten, so wird der Kuppelfinger 30 aus der Nut 29 ausgeschwenkt und in eine gehäusefeste Bogenführung 32 eingeschwenkt. Sowohl die Nut 29 des Mitnehmers 28 als auch die Bogenführung 32 haben zueinander gerichtete V-förmige öffnungen. Diese Öffnungen bewirken beim Ausschwenken des Kuppelfingers 30 aus dem Mitnehmer 28 eine Axialverschiebung der Synchronisierkupplung C-D in die Neutralstellung. Beim Einschwenken des Kuppelfingers 30 verursachen sie eine Axialverschiebung in die jeweils von der Schaltwalze 25 vorbestimmte Schaltstellung. Somit kann, während sich das Getriebe in Neutralstellung befindet (Kuppelfinger ausgeschwenkt), durch Verdrehen der Schaltwalze 25 jeder beliebige Gang vorgewählt und danach durch Einschwenken des Kuppelfingers 30 geschaltet werden.

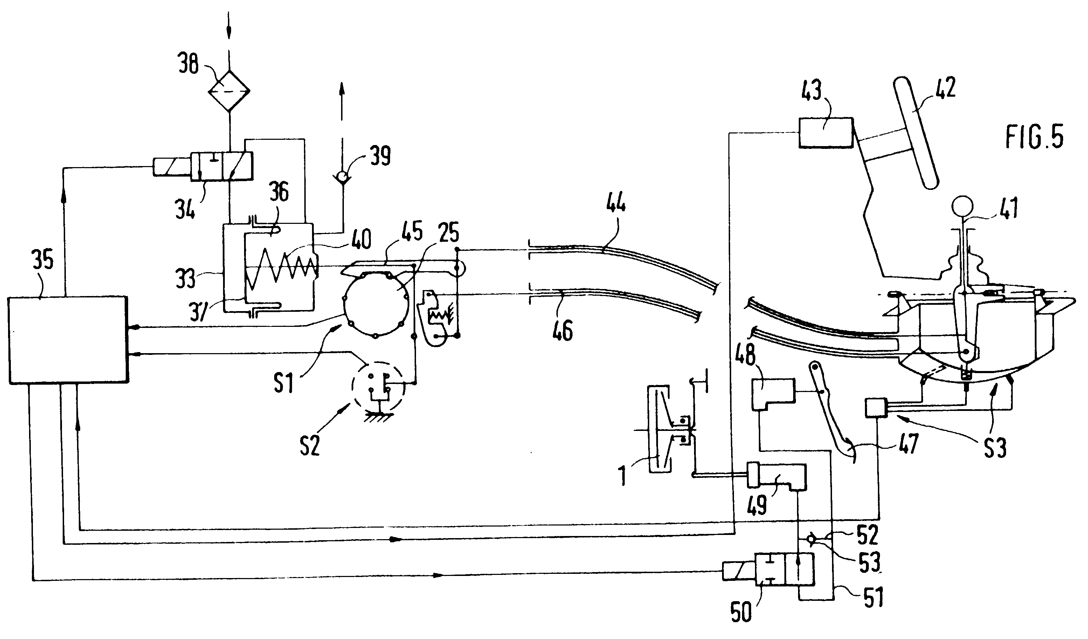

Die Synchronisierkupplung C-D bzw. die in ihre Schiebemuffe 20 eingreifende Schaltgabel 24 wird mit einem pneumatischen Servoantrieb betätigt, dessen Schaltplan in Fig. 5 dargestellt ist. Der Servoantrieb besteht aus einem Pneumatikzylinder 33, einem Magnetventil 34 und einem Steuergerät 35.

In dem Pneumatikzylinder 33 ist an einer Rollmembran 36 ein Stellkolben 37 befestigt, der mit dem Kuppelfinger 30 verbunden ist. Der Vorderseite des Stellkolbens 37 wird die in einem Filter 38 gereinigte Außenluft über das vom Steuergerät 35 gesteuerte Magnetventil 34 zugeführt. Die Rückseite des Stellkolbens 37 ist über ein Rückschlagventil 39 an den Saugrohrunterdruck des Hubkolbenmotors angeschlossen. Ist der Saugrohrunterdruck kleiner als der Druck der Außenluft, so wird der Stellkolben entgegen der Kraft einer Feder 40, die ihn am Boden des Pneumatikzylinders abstützt, verschoben.

Das Steuergerät erhält Signale von einem an der Schaltwalze 25 sitzenden Schalter S1, einem dem Stellkolben 37 zugeordneten Schalter S2 und einem Schalter S3, der am Schalthebel 41 angeordnet ist. Der Schalter S3 gibt Kontakt in der gezeichneten Mittelstellung des Schalthebels 41, sowie in beiden Endlagen, die Hochschaltung (+) und Runterschaltung (-) bedeuten.

Der Schalter S1 meldet an das Steuergerät die sieben Positionen der Schaltwalze 25 für die sechs Vorwärtsgänge und den R-Gang. Die Ganganzeige erfolgt in einem nahe dem Lenkrad 42 angeordneten Anzeigegerät 43.

Zur mechanischen Betätigung ist an dem Schalthebel 41 ein Seilzug 44 angelenkt, der die Schaltwalze 25 über einen Zughaken 45 dreht. Ein weiterer, am Schalthebel 41 angelenkter Seilzug 46 dient der R-Gang-Entsicherung.

Wird der Schalthebel 41 vom Fahrer aus der Mittelstellung bewegt, öffnet der Mittenkontakt des Schalters S 33. Dadurch wird das 3/2-Magnetventil 34 angesteuert, worauf der Stellkolben 37 die Synchronisierkupplung C-D auf Neutral stellt. Der Schalter S2 meldet durch Kontaktwechsel, wenn die Stellung erreicht ist. Währenddessen ist das Spiel im Seilzug 44 überwunden und der Zughaken 45 dreht die Schaltwalze 25 eine Stellung weiter. Der Schalter S1, der an der Schaltwalze 25 sitzt, meldet, wenn die korrekte Stellung der Schaltwalze 25 erreicht ist. Jetzt wird das Magnetventil 34 stromlos, so daß die Feder 40 die Schaltung der Synchronisierkupplung C-D bewirkt. Erst wenn Schalter S2 wieder schließt, ist die Schaltung beendet und der eingelegte Gang wird im Anzeigegerät 43 angezeigt. Damit ist der Schaltvorgang beendet, und der Schalthebel 41 wird durch eine Feder im Schaltbock in die Mittelstellung zurückbewegt.

Außerdem kann der Schalthebel aus der Mittelstellung zur Seite bewegt werden (Neutralstellung). Dadurch wird der Mittenkontakt am Schalter S3 ebenfalls verlassen, wodurch die Synchronisierkupplung C-D in Neutralstellung gestellt wird. Durch Zurückführen des Schalthebels in die Mittelstellung wird der zuletzt eingelegte Gang wieder eingelegt, da die Schaltwalze 25 die Position nicht verändert hat.

Es ist auch denkbar, aus der Neutralstellung die Schaltung zuzulassen, so daß der Fahrer einen beliebigen Gang vorwählen kann, mit dem er nach Rückkehr in die Mittelstellung weiterfahren kann. Das geschieht z.B. vor einer Ampel, wenn vom fünften auf den ersten Gang zurückgeschaltet wird.

Die Motorkupplung 1 ist vom Kupplungspedal 47 über einen Geberzylinder 48 und einen Nehmerzylinder 49 hydraulisch betätigt. Ein zusätzlicher Ausgang am Steuergerät kann eine Absicherung beim Wiedereinkuppeln übernehmen, indem ein 2/2 Magnetventil 50 in der Hydraulikleitung 51 zwischen Geberzylinder 48 und Nehmerzylinder 49 angesteuert wird. Ein in einer Parallelleitung 52 angeordnetes Rückschlagventil 53 ermöglicht jederzeit, die Motorkupplung 1 zu öffnen. Während des Schaltvorganges wird das Magnetventil 50 angesteuert, so daß nicht vor Ablauf des Schaltvorganges wieder eingekuppelt werden kann.

## Patentansprüche

1. Schaltvorrichtung eines Kraftfahrzeug-Gangschaltgetriebes mit mehreren durch Synchronisierkupplungen schaltbaren Getriebegängen, wobei jeweils Radpaare aus miteinander kämmenden Festrädern und Losrädern gebildet sind und die Getriebegänge durch gleichzeitiges Schließen zweier Synchronisierkupplungen mit Schiebemuffen, in die Schaltgabeln (22, 23, 24) eingreifen, manuell schaltbar sind, und wobei die Schiebemuffe (20) einer Synchronisierkupplung beim Schalten aller Getriebegänge mitwirkt,
**dadurch gekennzeichnet,**
- daß die Schiebemuffen (19, 4, 20) der Synchronisierkupplungen von einer Schaltwalze (25) betätigbar sind, und
- daß die beim Schalten aller Getriebegänge mitwirkende Schiebemuffe (20) von einem Servoantrieb (33, 34, 35) von der Schaltwalze (25) abkoppelbar oder mit dieser koppelbar ist und damit die Schiebemuffe (20) in Neutralstellung oder in Eingriffstellung mit der Schaltwalze bringt.

2. Schaltvorrichtung nach Anspruch 1,
**dadurch gekennzeichnet,**
daß die mit dem Servoantrieb zusammenwirkende Schaltgabel (24) über einen Mitnehmer (28) und einen aus ihm ausrastbaren Kuppelfinger (30) mit der Schaltwalze (25) verbunden ist, wobei der Kuppelfinger (30) durch den Servoantrieb (33, 34, 35) betätigt ist.

3. Schaltvorrichtung nach Anspruch 1 und 2,
**dadurch gekennzeichnet,**
daß der Servoantrieb (33, 34, 35) die Schiebemuffe (20) in öffnungsstellung bringt, bevor die Schaltwalze (25) manuell gedreht wird und in Schließstellung bringt, nachdem die Schaltwalze (25) die gewünschte neue Stellung erreicht hat.

4. Schaltvorrichtung nach einem der Ansprüche 1 bis 3,
**dadurch gekennzeichnet,**
daß die Haupt-Synchronisierungsarbeit für alle zu schaltenden Getriebegänge von der Synchronisierkupplung (C-D) und somit vom Servoantrieb (33, 34, 35) geleistet wird.

5. Schaltvorrichtung nach einem der Ansprüche 1 bis 4,
**dadurch gekennzeichnet,**
daß der Servoantrieb aus einem Pneumatikzylinder (33), einem Magnetventil (34) und einem Steuergerät (35) besteht.

6. Schaltvorrichtung nach Anspruch 5,
**dadurch gekennzeichnet,**
daß im Pneumatikzylinder (33) ein längsbeweglicher Stellkolben (37) unter Federvorspannung angeordnet ist, wobei zur Vorderseite des Stellkolbens Außenluft über ein Magnetventil (34) zuführbar ist und die Rückseite des Stellkolbens über ein Rückschlagventil (39) an den Saugrohrunterdruck des das Kraftfahrzeug antreibenden Hubkolbenmotors angeschlossen ist.

7. Schaltvorrichtung nach einem der Ansprüche 1 bis 6,
**dadurch gekennzeichnet,**
daß an einem Getriebe-Schalthebel (41) ein erster Schalter (S3), an dem Stellkolben (37) ein zweiter Schalter (S2), an der Schaltwalze (25) ein dritter Schalter (S1) angebracht ist, wobei die Signale der Schalter (S3, S2, S1) in das Steuergerät (35) eingehen, mit dem das Magnetventil (34) gesteuert ist.

8. Schaltvorrichtung nach einem der Ansprüche 1 bis 7,
**dadurch gekennzeichnet,**
- daß eine zwischen einem Hubkolbenmotor und dem Gangschaltgetriebe angeordnete Motorkupplung (1) hydraulisch mit einem Geberzylinder (48) und einem Nehmerzylinder (49) betätigbar ist, wobei der mit dem Kupplungspedal (47) betätigbare Geberzylinder (48) über eine erste Leitung (52) mit Rückschlagventil (53) und eine zweite parallele Leitung (51) mit eingebautem Magnetventil (50) an den die Motorkupplung (1) betätigenden Nehmerzylinder (49) angeschlossen ist, und
- daß das Magnetventil (34) vom Steuergerät (35) derart gesteuert wird, daß zur Sicherung gegen Mißbrauch das Einrücken der Motorkupplung (1) verhindert wird, solange der zweite Schalter (52) die richtige Stellung des Kuppelfingers (30) nicht signalisiert.

## Claims

1. A gear-shift device of a motor-vehicle gear-shift transmission, having a plurality of gears shiftable by synchronizing couplings, wherein pairs of gearwheels are formed respectively by mutually engaging fixed gearwheels and loose gearwheels and the gears engage in the gear-shift forks (22, 23, 24) by the simultaneous closure of two synchronizing couplings with sliding sleeves and are shiftable manually, and wherein the sliding sleeve (20) of a synchronizing coupling cooperates in the shifting of all the gears, **characterized in that**
- the sliding sleeves (19, 4, 20) of the synchronizing couplings are actuable by a gear-shift roller (25), and
- the sliding sleeve (20) cooperating in the shifting of all the gears is disengageable from the gear-shift roller (25) or is engageable therewith by a servo drive (33, 34, 35) and in this way moves the sliding sleeve (20) into the neutral position or into an engagement position with the gear-shift roller.

2. A gear-shift device according to Claim 1, **characterized in that** the gear-shift fork (24) cooperating with the servo drive is connected to the gear-shift roller (25) by way of an entrainment means (28) and a coupling finger (30) disengageable therefrom, wherein the coupling finger (30) is actuated by the servo drive (33, 34, 35).

3. A gear-shift device according to Claims 1 and 2, **characterized in that** the servo drive (33, 34, 35) moves the sliding sleeve (20) into an opening position before the gear-shift roller (25) is rotated manually, and moves it into a closed position after the gear-shift roller (25) has reached the desired new position.

4. A gear-shift device according to one of Claims 1 to 3, **characterized in that** the greater part of the synchronization for all the gears to be shifted is performed by the synchronizing coupling (**C-D**) and thus by the servo drive (33, 34, 35).

5. A gear-shift device according to one of Claims 1 to 4, **characterized in that** the servo drive comprises a pneumatic cylinder (33), a solenoid valve (34) and a control device (35).

6. A gear-shift device according to Claim 5, **characterized in that** a longitudinally movable displacement piston (37) is arranged pre-stressed by a spring in the pneumatic cylinder (33), wherein outside air can be supplied to the front end of the displacement piston by way of a solenoid valve (34) and the rear end of the displacement piston is connected by way of a return valve (39) to the suction-tube underpressure of the reciprocating-piston engine driving the motor vehicle.

7. A gear-shift device according to one of Claims 1 to 6, **characterized in that** a first switch (**S3**) is attached to a gear-shift lever (41), a second switch (**S2**) to the displacement piston (37), and a third switch (**S1**) to the gear-shift roller (25), wherein the signals from the switches (**S3, S2, S1**) are fed into the control device (35) by which the solenoid valve (34) is controlled.

8. A gear-shift device according to one of Claims 1 to 7, **characterized in that**
- an engine coupling (1) arranged between a reciprocating-piston engine and the gear-shift transmission is actuable hydraulically by a master cylinder (48) and a slave cylinder (49), wherein the master cylinder (48) actuable by the clutch pedal (47) is connected by way of a first line (52) with a return valve (53) and a second parallel line (51) with an incorporated solenoid valve (50) to the slave cylinder (49) actuating the engine coupling (1), and
- the solenoid valve (34) is controlled by the control device (35) in such a way that in order to guard against misuse the engagement of the engine coupling (1) is prevented for as long as the second switch (**S2**) does not signal the correct position of the coupling finger (30).

## Revendications

1. Dispositif de commande d'une boîte de vitesses de véhicule automobile avec plusieurs rapports de transmission à commander par des accouplements de synchronisation, dans lequel des paires de roues sont formées par des roues fixes et des roues folles engrenant entre elles et les rapports de transmission sont commandables manuellement, par fermeture simultanée de deux accouplements de synchronisation avec manchons coulissants, dans lesquels s'engagent des fourches de commutation (22, 23, 24), et dans lequel le manchon coulissant (20) d'un accouplement de synchronisation coopère pour la commande de tous les rapports de transmission,
caractérisé
- en ce que les manchons coulissants (19, 4, 20) des accouplements de synchronisation sont actionnables par un rouleau de commutation (25) et
- le manchon coulissant 20, coopérant lors de la commande de tous les rapports de transmission, peut être désaccouplé du rouleau de commutation (25) ou accouplé avec celui-ci, par un servo-mécanisme (33, 34, 35) et amène ainsi le manchon coulissant (20) dans une position neutre ou dans une position d'engagement avec le rouleau de commutation.

2. Dispositif de commande selon la revendication 1,
caractérisé
en ce que la fourche de commutation (24), coopérant avec le servo-mécanisme, est reliée, par un entraîneur (28) et un doigt d'accouplement (30), décrochable de celui-ci, avec le rouleau de commutation (25), le doigt d'accouplement (30) étant actionné par le servo-mécanisme (33, 34, 35).

3. Dispositif de commande selon les revendications 1 et 2,
caractérisé
en ce que le servo-mécanisme (33, 34, 35) amène le manchon coulissant (20) en position d'ouverture, avant que le rouleau de commutation (25) ne soit tourné manuellement et l'amène en position de fermeture, après que le rouleau de commutation (25) a atteint la nouvelle position voulue.

4. Dispositif de commande selon l'une des revendications 1 à 3,
caractérisé
en ce que le travail de synchronisation principal pour tous les rapports de transmission à commander, est accompli par l'accouplement de synchronisation (C-D) et donc par le servo-mécanisme (33, 34, 35).

5. Dispositif de commande selon l'une des revendications 1 à 4,
caractérisé
en ce que le servo-mécanisme est constitué d'un vérin pneumatique (33), d'une soupape magnétique (34) et d'un appareil de commande (35).

6. Dispositif de commande selon la revendication 5,
caractérisé
en ce que dans le vérin pneumatique (33), un piston de réglage (37) mobile longitudinalement, est placé sous la précontrainte d'un ressort, de l'air extérieur pouvant être amené par une soupape magnétique (34) vers la face avant du piston de réglage et la face arrière du piston de réglage étant raccordée, par un clapet de non-retour (39), à la dépression du tube d'admission du moteur à piston alternatif, entraînant le véhicule.

7. Dispositif de commande selon l'une des revendications 1 à 6,
caractérisé
en ce que sur un levier de changement de vitesse (41) est placé un premier interrupteur (S3), sur le piston de réglage (37), un deuxième interrupteur (S2), sur le rouleau de commutation (25), un troisième interrupteur (S1), les signaux des interrupteurs (S3, S2, S1) entrant dans l'appareil de commande (35) avec lequel est commandée la soupape magnétique (34).

8. Dispositif de commande selon l'une des revendications 1 à 7,
caractérisé
- en ce qu'un accouplement moteur (1), placé entre un moteur à piston alternatif et la boîte de vitesses, peut être actionné hydrauliquement avec un cylindre capteur (48) et un cylindre récepteur (49), le cylindre capteur (48), actionnable au moyen de la pédale d'embrayage (47), étant raccordé, par une première conduite (52) avec clapet de non-retour (53) et une seconde conduite (51) parallèle avec soupape magnétique (50) intégrée, au cylindre récepteur (49), actionnant l'accouplement moteur (1) et
- en ce que la soupape magnétique (34) est commandée par l'appareil de commande (35) de manière que pour la sécurité contre une utilisation abusive, l'embrayage de l'accouplement moteur (1) est empêché tant que le deuxième interrupteur (S2) ne signale pas la bonne position du doigt d'accouplement (30).
